# EUROPEAN PATENT APPLICATION

(11) **EP 2 114 069 A1**
(43) Date of publication of application: **04.11.2009**
(21) Application number: 09156571.3
(22) Date of filing: 30.03.2009
(51) Int. Cl.: H04N 5/445, H04N 7/16

(54) **Information receiving apparatus, information receiving method, program, and broadcast system**

(30) Priority: 30.04.2008 JP 2008119204
(71) Applicant: Sony Corporation, Tokyo (JP)
(72) Inventor: Takahashi, Hirotaka, Tokyo (JP); Murata, Yuki, Tokyo (JP); Yamamoto, Maki, Tokyo (JP)
(74) Representative: Thévenet, Jean-Bruno

(57) **Abstract**

Disclosed herein is an information receiving apparatus (20) including an EPG processing section (21) configured to acquire electric program guide information (EPG information) from broadcast waves in a suitably timed manner before storing the acquired EPG information; an iEPG information acquisition section (24) configured to acquire Internet-derived EPG information (iEPG information) from the Internet; and a reservation system section (27) configured to let programs be reserved for recording using time designations based on the iEPG information.

## Description

### BACKGROUND OF THE INVENTION

### 1. Field of the Invention

The present invention relates to an information receiving apparatus (such as a TV (television) set), an information receiving method, a program, and a broadcast system configured in such manner that programs can be reserved to be recorded through the Internet and that program guides can be acquired from broadcast waves.

### 2. Description of the Related Art

Digital broadcast systems are capable of transmitting many more programs parallelly and simultaneously than their analog counterparts. This has led to the commercialization of an electric program guide (EPG) system offering channel program information in addition to such media data as pictures and sounds. Digital TV sets today allow users to make program recording reservations using SI-EPG (System Information--Electric Program Guide) information obtained from broadcast waves (SI-EPG reservations). Techniques related to these TV sets are disclosed illustratively in Japanese Patent Laid-open Nos. 2000-13760 and 2002-44614.

Along with the rapid and widespread acceptance of the Internet in recent years has come the commercialization of what is known as the Internet Electric Program Guide (iEPG) system, a system that enables TV program recordings to be reserved using the Internet.

The iEPG system allows the user of a personal computer to search easily for program guides at iEPG program information websites. Upon finding a program desired to be viewed, the user need merely click on a "Reserve" or "iEPG" button in the program guide on the screen by operating a mouse or the like for simple recording reservation.

### SUMMARY OF THE INVENTION

There exist personal computers (PC) with a TV set feature capable of acquiring EPG information from broadcast waves of digital broadcasts. This type of PC allows programs to be reserved for recording through the program guide on the Internet (iEPG).

If programs are to be reserved for recording based on iEPG and if the PC has yet to acquire SI-EPG of the program in question, then the reservations need to be made by designating the times involved. Under the provisions of ARIB (Association of Radio Industries and Businesses), any program title acquired from sources other than broadcast waves should not be used as the title of a recording reservation. That means program titles may not be allocated to the programs reserved to be recorded using time designations.

With regard to digital TV sets, there exist ARIB operational rules stipulating that the recording reservations based on SI-EPG derived from broadcast waves are not to be displayed in a manner mixed with third-party metadata (exemplified by iEPG) derived from sources other than broadcast wave-based data.

In other words, programs to be reserved through iEPG have to be registered as time-designated reservations that exclude iEPG-based program information such as program tittles and genres. Where programs reserved through iEPG are found to exist in separately furnished SI-EPG as well, the iEPG reservations need to be replaced by SI-EPG reservations. Given such constraints, the majority of digital TV sets today opt to start recording programs reserved with time designations based on iEPG without making any further clarification of the programs to be recorded.

The embodiments of the present invention has been made in view of the above circumstances and provides an information receiving apparatus, an information receiving method, a program, and a broadcast system configured in such a manner that program reservations based on the time designations according to iEPG may be updated with and replaced by SI-EPG information, whereby the features realized merely with SI-EPG information may be implemented for the iEPG-based reservations as well.

In carrying out the present invention and according to one embodiment thereof, there is provided an information receiving apparatus including: an EPG processing section configured to acquire electric program guide information (EPG information) from broadcast waves in a suitably timed manner before storing the acquired EPG information; an iEPG information acquisition section configured to acquire Internet-derived EPG information (iEPG information) information from the Internet; and a reservation system section configured to let programs be reserved for recording using time designations based on the iEPG information; wherein the reservation system section is capable of updating the iEPG-based recording reservation of a desired program by use of the acquired EPG information and, every time EPG information is acquired by the EPG processing section, checks whether the acquired EPG information includes information that matches the iEPG-based recording reservation, the reservation system section being further configured such that if the acquired EPG information is found to include information that matches the iEPG-based recording reservation, then the reservation system section replaces the iEPG-based recording reservation with a recording reservation functionally equivalent to the matching information.

Preferably, the reservation system section may include: a recording reservation database configured to store reservation-related data; a matching processing section configured to search through the EPG information stored by the EPG processing section based on the iEPG information acquired by the iEPG information acquisition section in order to check whether there exists EPG information matching the acquired iEPG information; and a reservation registration processing section configured such that if the EPG information matching the acquired iEPG information is found to exist following the check by the matching processing section, then the reservation registration processing section replaces the iEPG information with the matching EPG information before registering the matching EPG information in the recording reservation database.

Preferably, if the EPG information matching the acquired iEPG information is not found to exist, then the reservation registration processing section may register the acquired iEPG information as a time-designated recording reservation in the recording reservation database and wait until the EPG information is acquired anew by the EPG processing section.

Preferably, when the EPG information is acquired anew by the EPG processing section, the matching processing section may search the recording reservation database for any iEPG-based time-designated recording reservation, the matching processing section being further configured such that if iEPG-based time-designated recording reservations are found to exist in the recording reservation database, then the matching processing section may recheck whether the acquired EPG information matches any one of the iEPG-based time-designated recording reservations; and if the EPG information is found to include information that matches the acquired iEPG information following the recheck by the matching processing section, then the reservation registration processing section may replace the matching iEPG-based time-designated recording reservation with the matching EPG information.

Preferably, if the EPG information matching the acquired iEPG information is not found to exist following the recheck by the matching processing section, then the reservation registration processing section may do nothing and wait until the EPG information is acquired anew by the EPG processing section.

Preferably, the EPG information may be acquired anew at least when, with no EPG information found to match a newly registered iEPG-based reservation, a currently broadcast program is viewed on the same channel as that of the iEPG-based reservation; when an instruction is explicitly given to acquire the EPG information through an EPG display; or when automatic EPG acquisition is carried out.

According to another embodiment of the present invention, there is provided an information receiving method including the steps of: acquiring electric program guide information (EPG information) from broadcast waves in a suitably timed manner before storing the acquired EPG information; acquiring Internet-derived EPG information (iEPG information) from the Internet; letting programs be reserved for recording using time designations based on the iEPG information; searching through the stored EPG information based on the acquired iEPG information in order to check whether there exists EPG information matching the acquired iEPG information; if the EPG information matching the acquired iEPG information is found to exist, then replacing the iEPG information with the matching EPG information before registering the matching EPG information in a recording reservation database; and if the EPG information matching the acquired iEPG information is not found to exist, then registering the acquired iEPG information as a time-designated recording reservation in the recording reservation database and waiting until the EPG information is acquired anew.

Preferably, the information receiving method of the embodiments of the present invention may further include the steps of: when the EPG information is acquired anew, searching the recording reservation database for any iEPG-based time-designated recording reservation; if iEPG-based time-designated recording reservations are found to exist in the recording reservation database, then rechecking whether the acquired EPG information matches any one of the iEPG-based time-designated recording reservations; if the EPG information is found to include information that matches the acquired iEPG information following the recheck, then replacing the matching iEPG-based time-designated recording reservation with the matching EPG information; and if the EPG information matching the acquired iEPG information is not found to exist following the recheck, then doing nothing and waiting until the EPG information is acquired anew.

According to a further embodiment of the present invention, there is provided a program for causing a computer to perform a procedure including the steps of: acquiring electric program guide information (EPG information) from broadcast waves in a suitably timed manner before storing the acquired EPG information; acquiring Internet-derived EPG information (iEPG information) from the Internet; letting programs be reserved for recording using time designations based on the iEPG information; searching through the stored EPG information based on the acquired iEPG information in order to check whether there exists EPG information matching the acquired iEPG information; if the EPG information matching the acquired iEPG information is found to exist, then replacing the iEPG information with the matching EPG information before registering the matching EPG information in a recording reservation database; and if the EPG information matching the acquired iEPG information is not found to exist, then registering the acquired iEPG information as a time-designated recording reservation in the recording reservation database and waiting until the EPG information is acquired anew.

According to an even further embodiment of the present invention, there is provided a broadcast system including: a program guide website configured to be accessible via the Internet; a broadcasting system configured to offer electric program guide information (EPG information) using broadcast waves; and an information receiving apparatus configured to have the capability of letting programs be reserved for recording through the program guide website accessible via the Internet and the capability of acquiring the EPG information from the broadcast waves; wherein the information receiving apparatus includes: an EPG processing section configured to acquire the EPG information from the broadcast waves in a suitably timed manner before storing the acquired EPG information; an iEPG information acquisition section configured to acquire Internet-derived EPG information (iEPG information) from the Internet; and a reservation system section configured to let programs be reserved for recording using time designations based on the iEPG information; wherein the reservation system section is capable of updating the iEPG-based recording reservation of a desired program by use of the acquired EPG information and, every time EPG information is acquired by the EPG processing section, checks whether the acquired EPG information includes information that matches the iEPG-based recording reservation, the reservation system section being further configured such that if the acquired EPG information is found to include information that matches the iEPG-based recording reservation, then the reservation system section replaces the iEPG-based recording reservation with a recording reservation functionally equivalent to the matching information.

According to the embodiments of the present invention, as outlined above, whenever the EPG processing section acquires EPG information, the reservation system section checks whether the acquired EPG information matches any of the iEPG-based recording reservations that have been stored. If the check reveals that the acquired EPG information includes information matching any iEPG-based recording reservation, the reservation system section replaces the matching iEPG-based recording reservation with a recording reservation functionally equivalent to the matching EPG information.

According to the invention, the iEPG-based time-designated recording reservation of a desired program may be updated using SI-EPG information, i.e., replaced with the matching SI-EPG reservation. This makes it possible for iEPG-based recording reservations to appropriate the features that are ordinarily available merely with SI-EPG reservations.

### BRIEF DESCRIPTION OF THE DRAWINGS

Further aims and advantages of the embodiments of the present invention will become apparent upon a reading of the following description and appended drawings in which:
Fig. 1 is a schematic view showing a typical configuration of a broadcast system that uses an information receiving apparatus practiced as one embodiment of the present invention;
Fig. 2 is a schematic view depicting an example of the information receiving apparatus embodying the present invention;
Fig. 3 is a functional block diagram explanatory of how the information receiving apparatus works to match iEPG information against SI-EPG information;
Fig. 4 is a flowchart of steps in which the information receiving apparatus works to match iEPG information against SI-EPG information;
Fig. 5 is a schematic view showing a first state (state 1) of a PC (personal computer) furnished with a digital TV broadcast receiving apparatus;
Fig. 6 is a schematic view showing a second state (state 2) of the PC furnished with the digital TV broadcast receiving apparatus; and
Fig. 7 is a schematic view showing a third state (state 3) of the PC furnished with the digital TV broadcast receiving apparatus.

### DETAILED DESCRIPTION OF THE PREFERRED EMBODIMENTS

The preferred embodiments of the present invention will now be described in reference to the accompanying drawings.

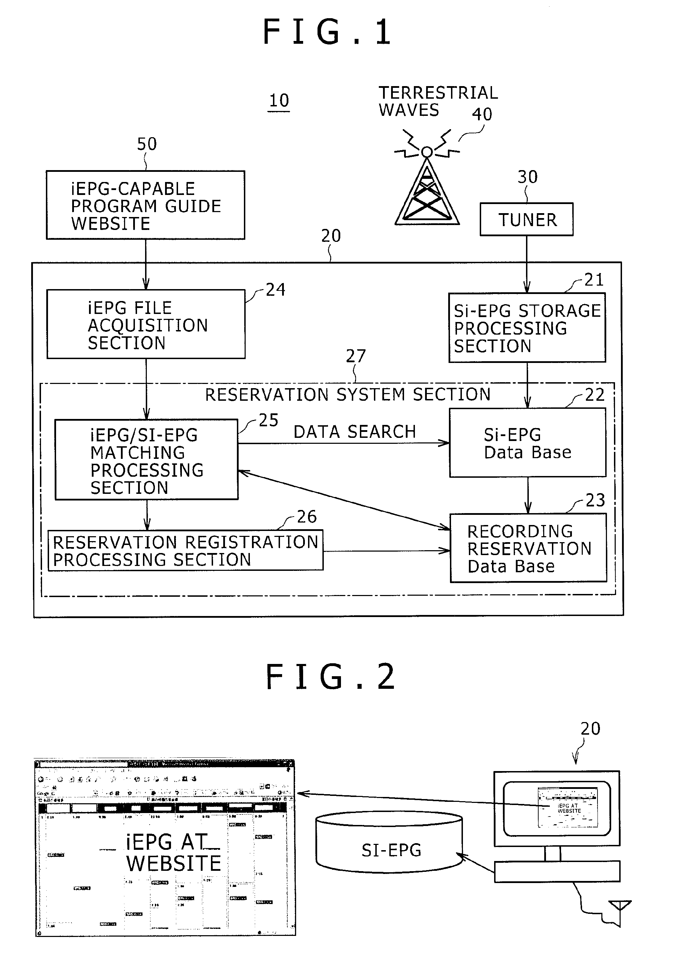

Fig. 1 schematically shows a typical configuration of a broadcast system 10 that uses an information receiving apparatus 20 practiced as one embodiment of the present invention. Fig. 2 schematically depicts an example of the information receiving apparatus 20 embodying the present invention.

As shown in Fig. 1, the broadcast system 10 is made up of the information receiving apparatus 20, a tuner 30 used by the information receiving apparatus 20, a broadcasting station 40 broadcasting terrestrial waves, and an iEPG-capable program guide website 50.

The information receiving apparatus 20 is designed to be electronic equipment capable of allowing programs to be reserved for recording at the program guide website 50 on the Internet. With its ability to acquire EPG from broadcast waves, the information receiving apparatus 20 can be used in combination with almost all TV sets.

Examples of the information receiving apparatus 20 include a PC (personal computer) furnished with a digital TV broadcast receiving apparatus, and a digital TV receiving and recording apparatus.

Fig. 2 illustratively indicates a PC equipped with a digital TV broadcast receiving apparatus as the information receiving apparatus 20.

The information receiving apparatus 20 is capable of updating iEPG-based time-designated recording reservations of programs using SI-EPG information. When program information is subsequently acquired by an automatic SI-EPG acquisition system, the information receiving apparatus 20 checks the acquired SI-EPG information against the iEPG-based recording reservations at that point in time and, if the acquired SI-EPG information matches the iEPG-based recording reservation of any one of the programs, replaces that reservation with a recording reservation functionally equivalent to the matching SI-EPG information.

The information receiving apparatus 20 is intended illustratively for use when a receiver connected with the apparatus 20 is at the initial stage of use or where a system incorporating the apparatus 20 is subject to constraints on the capacity to store program guide information. That is, when the receiver used for the first time or the system with limited data storage capacity is set with iEPG-based recording reservations that have yet to be derived from SI-EPG, the information receiving apparatus 20 may subsequently replace these reservations with corresponding SI-EPG-based reservations. The information receiving apparatus 20 acquires SI-EPG information in a suitably timed manner, checks the acquired information against the existing iEPG-based reservations for a match, and replaces any matching iEPG-based reservation with a corresponding SI-EPG-based reservation.

In other words, the information receiving apparatus 20 allows iEPG-based reservations to be utilized in a seamlessly interchangeable manner with SI-EPG-based reservations where the receiver is used for the first time, where SI-EPG may not be acquired under certain circumstances, or where merely iEPG-based reservations are made for such a distant future that SI-EPG information about the applicable programs has yet to be provided.

After iEPG-based reservations have been made, the information receiving apparatus 20 acquires SI-EPG information, matches the acquired information against the iEPG-based reservations, and replaces any one of them with a corresponding SI-EPG-based reservation. This makes it possible for the iEPG-based reservations to appropriate such features as "time change follow-up" and "event follow-up" that have been available merely with SI-EPG-based reservations. That is, the information receiving apparatus 20 permits seamlessly interchangeable usage of both iEPG-based and SI-EPG-based reservations.

The information receiving apparatus 20 having these capabilities includes an SI-EPG storage processing section 21, an SI-EPG database 22, a recording reservation database 23, an iEPG file acquisition section 24 acting as an iEPG information acquisition section, a matching processing section 25, and a reservation registration processing section 26. With this embodiment, the SI-EPG database 22, recording reservation database 23, matching processing section 25, and reservation registration processing section 26 make up a reservation system section 27.

The SI-EPG storage processing section 21 acquires SI-EPG information from the tuner 30 and stores the acquired information into the SI-EPG database 22. The SI-EPG storage processing section 21 and SI-EPG database 22 constitute an EPG processing section.

The SI-EPG database 22 stores SI-EPG information. The SI-EPG database 22 may be accessed by the SI-EPG storage processing section 21 and matching processing section 25. When SI-EPG information is acquired anew, the matching processing section 25 gains access to the recording reservation database 23 via the SI-EPG database 22 to check whether there exist iEPG-based time-designated recording reservations held therein.

The recording reservation database 23 stores reservation-related data. The recording reservation database 23 allows those of the acquired iEPG-based reservations which have their counterparts in the stored SI-EPG information to be replaced by the latter.

The iEPG file acquisition section 24 downloads iEPG information from the Internet illustratively when an [iEPG] button is selected on the display screen of that program guide website. The iEPG file acquisition section 24 supplies the acquired iEPG information to the matching processing section 25.

The matching processing section 25 searches through the SI-EPG database 22 based on the channel information, broadcast start/end time information, event information, and program titles in the downloaded iEPG information in order to check whether there is any applicable SI-EPG information. When SI-EPG information is acquired anew, the matching processing section 25 searches the recording reservation database 23 for iEPG-based time-designated recording reservations. If such iEPG-based time-designated recording reservations are found to exist in the recording reservation database 23, the matching processing section 25 rechecks the newly acquired SI-EPG information against each of these reservations. The matching processing section 25 outputs the result of the matching to the reservation registration processing section 26.

It may be found that as a result of the processing by the matching processing section 25, the SI-EPG database 22 contains SI-EPG information corresponding to the acquired iEPG information. In that case, the reservation registration processing section 26 replaces the corresponding iEPG information with the matching SI-EPG information and registers the matching information in the recording reservation database 23.

It may also be found that the SI-EPG database 22 contains no SI-EPG information corresponding to the acquired iEPG information. In this case, the reservation registration processing section 26 registers the acquired iEPG information in the recording reservation database 23 as time-designated recording reservations and waits for the SI-EPG information to be acquired anew.

If any applicable SI-EPG information is found to exist as a result of the recheck for matching, the reservation registration processing section 26 replaces the applicable iEPG time-designated reservation with the matching SI-EPG information. If no applicable SI-EPG information is found to exist as a result of the recheck for matching, the reservation registration processing section 26 does nothing and waits for the SI-EPG information to be acquired anew.

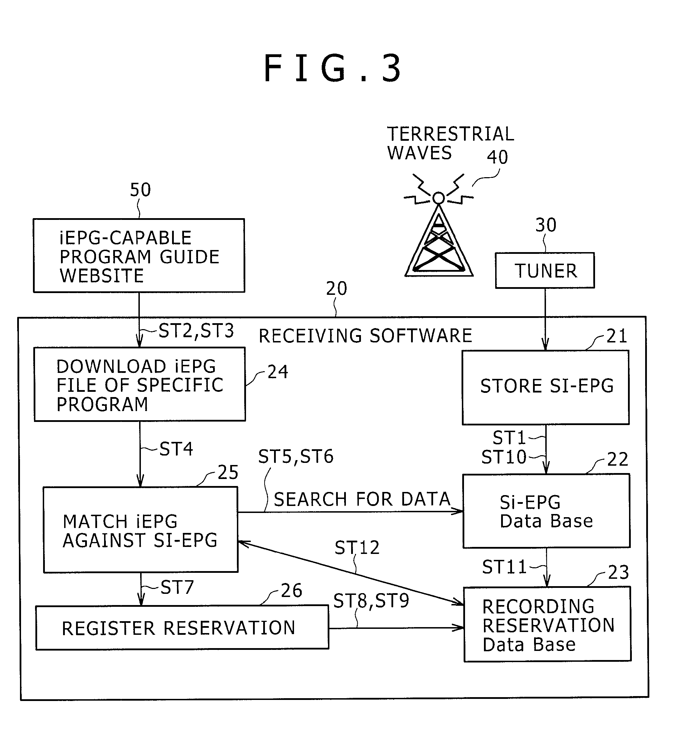

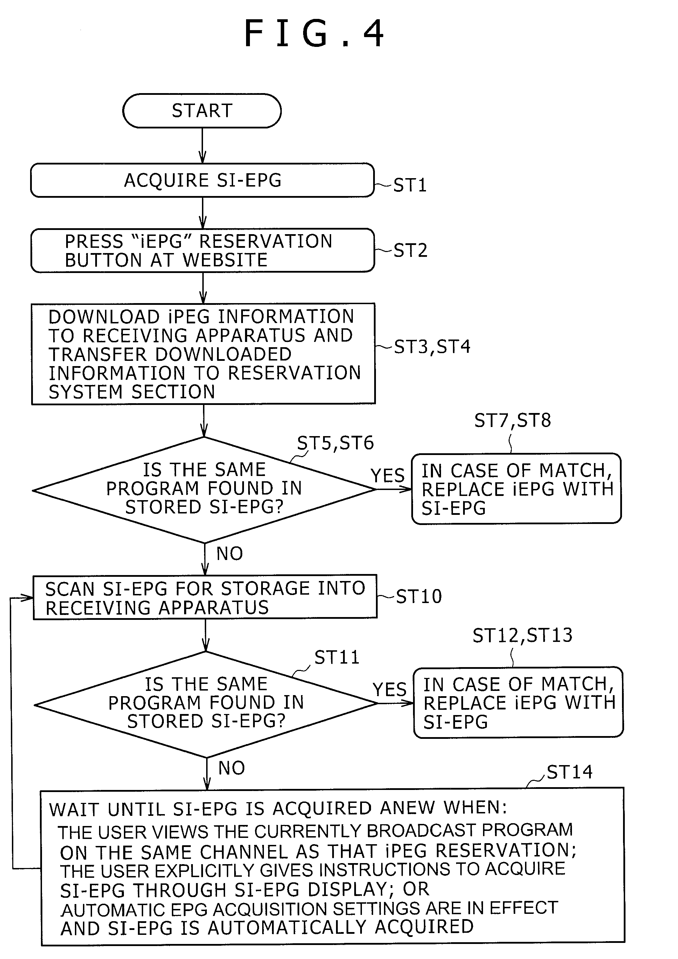

Described below in reference to Figs. 3 and 4 are the basic workings of the information receiving apparatus 20 structured as described above. Fig. 3 is a functional block diagram explanatory of how the information receiving apparatus 20 works to match iEPG information against SI-EPG information. Fig. 4 is a flowchart of steps in which the information receiving apparatus 20 works to check iEPG information against SI-EPG information.

The flow of the processing whereby iEPG information and SI-EPG information are checked for a match is as follows.

In step ST1, the SI-EPG storage processing section 21 acquires SI-EPG information from the tuner 30 and stores the acquired information into the SI-EPG database 22. In step ST2, the user selects an [iEPG] button displayed at an iEPG-capable program guide website by way of the iEPG file acquisition section 24. In step ST3, the selected iEPG information is downloaded. In step ST4, the iEPG file acquisition section 24 transfers the downloaded iEPG information to the reservation system section 27 made up of the matching processing section 25 and other components.

In step ST5, the matching processing section 25 searches through the SI-EPG database 22 based on the channel information, broadcast start/end times, event information, and program titles in the downloaded iEPG information. In step ST6, the matching processing section 25 checks whether the stored SI-EPG information contains information matching the acquired iEPG information (i.e., whether the same programs exist). In step ST7, the matching processing section 25 supplies the result of the check to the reservation registration processing section 26.

In step ST8, if the SI-EPG information matching the acquired iEPG information is found to exist, then the reservation registration processing section 26 replaces the applicable iEPG information with the matching SI-EPG information and registers the matching information in a reservation-related database. If the SI-EPG information matching the acquired iEPG information is not found to exist, then the reservation registration processing section 26 registers the iEPG information as the time-designated recording reservations in the reservation-related database (in step ST9) and waits for the SI-EPG information to be acquired anew.

When the SI-EPG information is acquired anew in step ST10, the matching processing section 25 searches through the recording reservation database 23 to check whether there exist iEPG-based time-designated reservations illustratively through the SI-EPG database 22. If iEPG-based time-designated reservations are found to exist in the recording reservation database 23, the matching processing section 25 rechecks in step ST12 whether the newly acquired SI-EPG information matches any one of the reservations. The matching processing section 25 feeds the result of the matching to the reservation registration processing section 26.

If any SI-EPG information matching the acquired iEPG information is found to exist, the reservation registration processing section 26 replaces the applicable iEPG time-designated reservation with the matching SI-EPG information in step ST13. If no SI-EPG information is found to match the acquired iEPG information, then the reservation registration processing section 26 does nothing and waits for the SI-EPG information to be acquired anew in step ST14.

The SI-EPG information is acquired anew illustratively when the user views the currently broadcast program on the same channel as that of an iEPG reservation, or when the user explicitly gives an instruction to acquire SI-EPG information through an SI-EPG display.

The foregoing was an explanation of the basic workings of the information receiving apparatus 20. What follows is a more detailed description of how the information receiving apparatus 20 operates.

It is assumed here that the information receiving apparatus 20 is a PC (personal computer) furnished with a digital TV broadcast receiving apparatus as shown in Fig. 2.

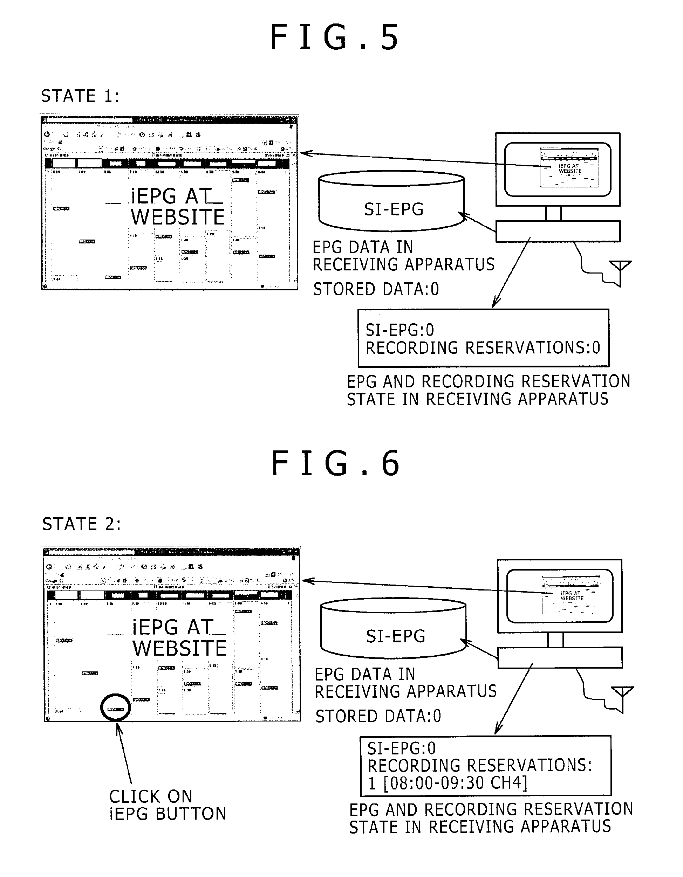

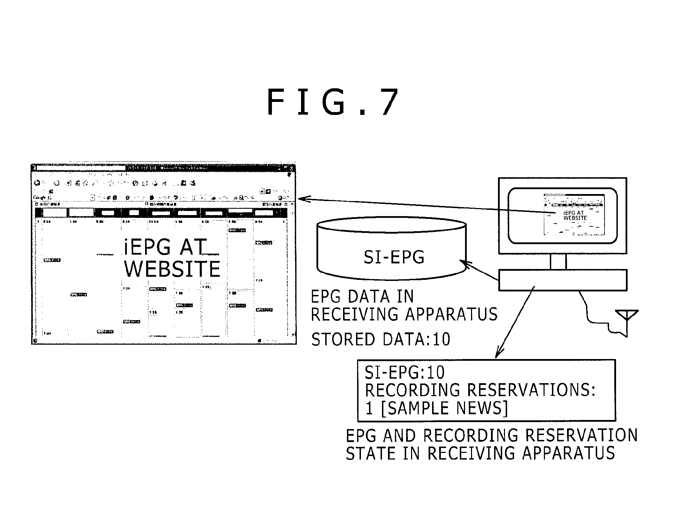

Fig. 5 schematically shows a first state (state 1) of the PC furnished with the digital TV broadcast receiving apparatus. Fig. 6 schematically depicts a second state (state 2) of the PC furnished with the digital TV broadcast receiving apparatus. Fig. 7 schematically indicates a third state (state 3) of the PC furnished with the digital TV broadcast receiving apparatus.

It is also assumed that the information receiving apparatus 20 contains insufficiently accumulated SI-EPG information compared with large quantities of iEPG-based program information being stored, and that the apparatus 20 is ready to let the user browse websites. For purpose of simplification and illustration, neither SI-EPG information nor recording reservations are assumed to exist for the moment.

In a first state (state 1), it is assumed that the user clicks on an "iEPG" button on the iEPG screen of a suitable website so as to reserve a program called "Sample News" and that the selected information is registered as an iEPG-based time-designated reservation in the information receiving apparatus 20. It is also assumed that as shown in Fig. 6, the iEPG-based reservation is assigned a character string which serves as a reservation title and which represents an ID for identifying the reservation in question (in a second state).

After the second state (state 2) is reached, it is necessary to match the registered reservation against SI-EPG information when the latter is acquired anew. The SI-EPG information is acquired at least when, with no SI-EPG information found to match a newly registered iEPG-based reservation, the user views the currently broadcast program on the same channel as that of the iEPG-based reservation; when the user explicitly gives an instruction to acquire the SI-EPG information through an SI-EPG display; or when automatic SI-EPG acquisition is carried out.

After the SI-EPG is acquired in a suitably timed manner as described above, the matching processing section 25 of the information receiving apparatus 20 checks iEPG-based reservations against the newly acquired SI-EPG information for a match. If the result of the matching coming from the matching processing section 25 reveals a match, the reservation registration processing section 26 replaces the iEPG-based time-designated reservation information of the matching program with the corresponding SI-EPG metadata (in a third state).

Described below are specific examples of the matching between iEPG-based reservations and SI-EPG information.

### <Matching between iEPG-based reservations and SI-EPG information>

The steps described below are carried out to implement the matching between iEPG-based reservations and SI-EPG information.

The matching process presupposes that the channels to be recorded, broadcast dates, broadcast start/end times, event information, and/or titles of programs are found written in the iEPG-based reservations.

### <1. Matching based on channel information, broadcast dates, broadcast start/end times, and event information>

The event information is an ID assigned to each program to be broadcast on each channel. Each ID is unique at least within the same day. A search is made for SI-EPG information that matches the channel and event information in the iEPG-based reservations. If the broadcast start/end times of a given program fall within a predetermined time period each, that program is found to be the same. Examples of the information about a given program are as follows:

### (Example of SI-EPG information)

Channel information (service ID): 1024
Broadcast start/end times: 08:00-09:30, March 31, 2008
Event information (event ID): 3475

### (Example of iEPG information)

It is assumed that a "tvpid" file downloaded from the iEPG website has its content formatted as follows:
Content-type: application/x-tv-program-digital-info; charset=shift_jis
version: 2
station: DFS00400
year: 2008
month: 03
date: 31
start: 08:00
end: 09:30
program-title: Sample News
program-id: 3475
genre-1: 8
subgenre-1: 1
genre-2: 8
subgenre-2: 6
Copycontrol-1: 1,2,0
Component-video-1: 179
Component-audio-1: 3"jpn,0

### <2. Matching based on channel information, broadcast dates, broadcast start/end times, and program titles>

Where a program title is written but no event information is found recorded in a given iEPG-based reservation, the matching process needs to be performed based on program titles. Because SI-EPG information includes ARIB-defined special characters (in Japanese) which do not exist in iEPG information, these SI-EPG-specific characters, along with corresponding characters converted to iEPG from them, are removed from the character strings constituting each program title in SI-EPG and iEPG. The first three Japanese characters of each of the remaining character strings are then checked. If the first three characters of a program title are the same between the two kinds of information, the program in question is found to be the matching program.

Specific steps of the matching process are explained below.

### <Details of the matching process>

The matching process is typically carried out in the following steps:
(1) Check whether the collated broadcast dates match.
   A check is made to determine whether the broadcast start date in SI-EPG matches the year, month, and date in iEPG upon comparison.
(2) Check whether the collated items of channel information match.
   The number of the channel information (service ID) in SI-EPG is converted to a hexadecimal number. The resulting hexadecimal number is checked against the last four digits of the number of the station in iEPG for a match. In the above example, the channel information (service ID) number "1024" is converted to a hexadecimal number "400." The last four digits of the station number "DFS00400" in iEPG are "0400," a number that matches the converted service ID.
(3) Check whether the collated event information items or program titles match.
   This step braches to one of two subordinate steps (3-1) and (3-2) depending on the availability of the information.
(3-1) Check whether the collated items of event information match.
   The event information (event ID) in SI-EPG is compared with the program-id number in iEPG for a match.
(3-2) Check whether the collated program titles match.
   The first three Japanese characters of the program title in SI-EPG excluding the ARIB-defined special characters are compared for a match with the first three Japanese characters of the program title in iEPG excluding the converted characters derived from the ARIB-defined special characters.
(4) Check whether deviations of the broadcast start/end times fall within a predetermined time period each.

It might happen that according to the circumstances, the station shifts the program start time and/or program end time of a certain program to accommodate a reorganized program schedule. In such a case, the times of the program of interest in iEPG may be found deviating from those of the corresponding program in SI-EPG depending on when the iEPG information was downloaded. This desires checking whether the broadcast start/end times of the program in question fall within a predetermined time period of deviation each. Illustratively, the predetermined time period of deviation is assumed to be one hour in this example. The expressions used for the evaluation are as follows.

### [Evaluation expressions]

|Broadcast start time in SI-EPG - start time in iEPG| < 1 hour
|Broadcast end time in SI-EPG - end time in iEPG| < 1 hour

As described above, the information receiving apparatus 20 includes the SI-EPG storage processing section 21 for storing acquired EPG information, iEPG file acquisition section 25 capable of acquiring iEPG information from the program guide website 50, and reservation system section 27 for allowing the user to make time-designated recording reservations based on the iEPG information. The reservation system section 27 is capable of updating the iEPG-based time-designated recording reservation of a desired program using the EPG information. When the EPG information is acquired by the EPG acquisition capability of the EPG processing section, the reservation system section 27 at that point in time checks the iEPG-based recording reservation of the program in question against the EPG information. If the EPG information is found to include information corresponding to the iEPG-based reservation of interest, the reservation system section 27 replaces the iEPG-based reservation with a functionally equivalent recording reservation derived from the matching EPG information.

The information receiving apparatus 20 embodying the present invention thus provides the following major benefits.

The embodiment checks a plurality of items of program information derived from iEPG-based reservations against EPG information whenever the latter information is acquired. The matching iEPG-based reservation is then replaced with the corresponding EPG reservation furnished with the usual features that have merely been available from the program guide on the receiver. As a result, when the user makes iEPG-based reservations of future programs on which EPG information has yet to be furnished, the reservations are checked later against the EPG information and replaced therewith upon match, so that all features of EPG-based reservations are made available for the corresponding iEPG-based reservations as well.

In other words, when a receiver connected with the information receiving apparatus 20 is at the initial stage of use or where a system incorporating the apparatus 20 is subject to constraints on the capacity to store program guide information derived from broadcast waves, the apparatus 20 allows the user to make iEPG-based recording reservations that have yet to be derived from SI-EPG and subsequently replaces these reservations with corresponding SI-EPG-based reservations.

That is, the information receiving apparatus 20 allows iEPG-based reservations to be used in a seamlessly interchangeable manner with SI-EPG-based reservations where the receiver is operated for the first time, where SI-EPG may not be acquired under certain circumstances, or where merely iEPG-based reservations are made for such a distant future that SI-EPG information about the applicable programs has yet to be provided.

The information receiving method described above in detail may be provided in the form of a program constituted by the relevant steps for execution by a CPU or some other suitable computing equipment. The program may be stored on a recording medium such as a semiconductor memory, a magnetic disk, an optical disk, or a floppy (registered trademark) disk and may be accessed by a computer loaded with that recording medium for program execution.

The present application contains subject matter related to that disclosed in Japanese Priority Patent Application JP 2008-119204 filed in the Japan Patent Office on April 30, 2008.

It should be understood by those skilled in the art that various modifications, combinations, sub-combinations and alterations may occur depending on design requirements and other factor in so far as they are within the scope of the appended claims or the equivalents thereof.

## Claims

1. An information receiving apparatus comprising:
an electric program guide (EPG) processing section (21) configured to acquire electric program guide information (EPG information) from broadcast waves in a suitably timed manner before storing the acquired EPG information;
an internet electric program guide (iEPG) information acquisition section (24) configured to acquire Internet-derived EPG information (iEPG information) from the Internet; and
a reservation system section (27) configured to let programs be reserved for recording using time designations based on said iEPG information; wherein
said reservation system section (27) is capable of updating the iEPG-based recording reservation of a desired program by use of the acquired EPG information and, every time EPG information is acquired by said EPG processing section (21), checks whether the acquired EPG information includes information that matches said iEPG-based recording reservation, said reservation system section (27) being further configured such that if said acquired EPG information is found to include information that matches said iEPG-based recording reservation, then said reservation system section (27) replaces said iEPG-based recording reservation with a recording reservation functionally equivalent to the matching information.

2. The information receiving apparatus according to claim 1, wherein
said reservation system section (27) includes
a recording reservation database (23) configured to store reservation-related data;
a matching processing section (25) configured to search through the EPG information stored by said EPG processing section (21) based on the iEPG information acquired by said iEPG information acquisition section (24) in order to check whether there exists EPG information matching the acquired iEPG information; and
a reservation registration processing section (26) configured such that if the EPG information matching said acquired iEPG information is found to exist following the check by said matching processing section (25), then said reservation registration processing section (26) replaces said iEPG information with the matching EPG information before registering said matching EPG information in said recording reservation database (23).

3. The information receiving apparatus according to claim 2, wherein
if the EPG information matching the acquired iEPG information is not found to exist, then said reservation registration processing section (26) registers the acquired iEPG information as a time-designated recording reservation in said recording reservation database (23) and waits until said EPG information is acquired anew by said EPG processing section (21).

4. The information receiving apparatus according to claim 2, wherein
when said EPG information is acquired anew by said EPG processing section (21), said matching processing section (25) searches said recording reservation database (23) for any iEPG-based time-designated recording reservation, said matching processing section (25) being further configured such that if iEPG-based time-designated recording reservations are found to exist in said recording reservation database (23), then said matching processing section (25) rechecks whether the acquired EPG information matches any one of the iEPG-based time-designated recording reservations, and
if said EPG information is found to include information that matches the acquired iEPG information following the recheck by said matching processing section (25), then said reservation registration processing section (26) replaces the matching iEPG-based time-designated recording reservation with the matching EPG information.

5. The information receiving apparatus according to claim 4, wherein
if the EPG information matching the acquired iEPG information is not found to exist following the recheck by said matching processing section (25), then said reservation registration processing section (26) does nothing and waits until said EPG information is acquired anew by said EPG processing section (21).

6. An information receiving apparatus according to claim 5, wherein
said EPG information is acquired anew at least when, with no EPG information found to match a newly registered iEPG-based reservation, a currently broadcast program is viewed on the same channel as that of the iEPG-based reservation, when an instruction is explicitly given to acquire said EPG information through an EPG display, or when automatic EPG acquisition is carried out.

7. An information receiving method comprising the steps of:
acquiring electric program guide information (EPG information) from broadcast waves in a suitably timed manner before storing the acquired EPG information;
acquiring Internet-derived EPG information (iEPG information) from the Internet;
letting programs be reserved for recording using time designations based on said iEPG information;
searching through the stored EPG information based on the acquired iEPG information in order to check whether there exists EPG information matching said acquired iEPG information;
if the EPG information matching the acquired iEPG information is found to exist, then replacing the iEPG information with the matching EPG information before registering said matching EPG information in a recording reservation database (23); and
if the EPG information matching the acquired iEPG information is not found to exist, then registering the acquired iEPG information as a time-designated recording reservation in said recording reservation database (23) and waiting until said EPG information is acquired anew.

8. The information receiving method according to claim 7, further comprising the steps of:
when said EPG information is acquired anew, searching said recording reservation database (23) for any iEPG-based time-designated recording reservation;
if iEPG-based time-designated recording reservations are found to exist in said recording reservation database (23), then rechecking whether the acquired EPG information matches any one of the iEPG-based time-designated recording reservations;
if said EPG information is found to include information that matches the acquired iEPG information following the recheck, then replacing the matching iEPG-based time-designated recording reservation with the matching EPG information; and
if the EPG information matching the acquired iEPG information is not found to exist following the recheck, then doing nothing and waiting until said EPG information is acquired anew.

9. A broadcast system comprising:
a program guide website configured to be accessible via the Internet;
a broadcasting system configured to offer electric program guide information (EPG information) using broadcast waves; and
an information receiving apparatus (20) configured to have the capability of letting programs be reserved for recording through said program guide website accessible via the Internet and the capability of acquiring said EPG information from said broadcast waves; wherein
said information receiving apparatus is according to claim 1.

10. The broadcast system according to claim 9, wherein
said reservation system section (27) further comprises:
a recording reservation database (23) configured to store reservation-related data;
a matching processing section (25); and
a reservation registration processing section (26);
said matching processing section (25) searches through the EPG information stored by said EPG processing section (21) based on the iEPG information acquired by said iEPG information acquisition section (24) in order to check whether there exists EPG information matching the acquired iEPG information,
when said EPG information is acquired anew by said EPG processing section (21), said matching processing section (23) searches said recording reservation database (23) for any iEPG-based time-designated recording reservation, said matching processing section (25) being further configured such that if iEPG-based time-designated recording reservations are found to exist in said recording reservation database (23), then said matching processing section (25) rechecks whether the acquired EPG information matches any one of the iEPG-based time-designated recording reservations,
if said EPG information is found to include information that matches the acquired iEPG information following the recheck by said matching processing section (25), then said reservation registration processing section (26) replaces the matching iEPG-based time-designated recording reservation with the matching EPG information before registering said matching EPG information in said recording reservation database (23),
if the EPG information matching the acquired iEPG information is not found to exist, then said reservation registration processing section (26) does nothing and waits until said EPG information is acquired anew by said EPG processing section,
if the EPG information matching said acquired iEPG information is found to exist following the recheck by said matching processing section (26), then said reservation registration processing section replaces said iEPG information with the matching EPG information, and
if the EPG information matching said acquired iEPG information is not found to exist following the recheck by said matching processing section (25), then said reservation registration processing section (26) does nothing and waits until said EPG information is acquired anew by said EPG processing section (21).

11. The broadcast system according to claim 11, wherein
said EPG information is acquired anew at least when, with no EPG information found to match a newly registered iEPG-based reservation, a currently broadcast program is viewed on the same channel as that of the iEPG reservation, when an instruction is explicitly given to acquire said EPG information through an EPG display, or when automatic EPG acquisition is carried out.
